(19) Europäisches Patentamt

European Patent Office

Office européen des brevets

(11) EP 3 057 436 B1

(12) **EUROPEAN PATENT SPECIFICATION**

(45) Date of publication and mention
of the grant of the patent:
**27.03.2019 Bulletin 2019/13**

(21) Application number: **14802088.6**

(22) Date of filing: **17.10.2014**

(51) Int Cl.:
*A23C 9/156* (2006.01)        *A23C 19/09* (2006.01)
*A23C 19/076* (2006.01)

(86) International application number:
**PCT/FI2014/050787**

(87) International publication number:
**WO 2015/055897 (23.04.2015 Gazette 2015/16)**

(54) **A METHOD OF PRODUCING AN AERATED DAIRY PRODUCT AND AN AERATED DAIRY PRODUCT**

VERFAHREN ZUR HERSTELLUNG EINES BELÜFTETEN MILCHPRODUKTS UND BELÜFTETES MILCHPRODUKT

PROCÉDÉ DE PRODUCTION DE PRODUIT LAITIER AÉRÉ ET PRODUIT LAITIER AÉRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2013 FI 20136028**

(43) Date of publication of application:
**24.08.2016 Bulletin 2016/34**

(73) Proprietor: **Valio Ltd**
**00370 Helsinki (FI)**

(72) Inventors:
• **HELLE, Ulla**
**FI-00370 Helsinki (FI)**

• **LAPPALAINEN, Varpu**
**FI-00370 Helsinki (FI)**

(74) Representative: **Kolster Oy Ab**
**(Salmisaarenaukio 1)**
**P.O. Box 204**
**00181 Helsinki (FI)**

(56) References cited:
**EP-A1- 0 937 409        EP-A1- 1 938 697
EP-A2- 0 818 149        WO-A1-2014/177762
WO-A2-2004/105498      DE-A1- 3 727 680
FR-A1- 2 423 163        GB-A- 1 476 309
US-A- 4 855 155         US-A1- 2006 105 083
US-A1- 2007 003 681     US-A1- 2012 121 762**

## Description

### Field of the invention

The present invention relates to a method of producing an aerated dairy product. Specifically, the invention relates to a method of producing an aerated soured dairy product. The present invention relates also to an aerated dairy product. In addition, the present invention relates to a method of producing a premix for an aerated dairy product. The present invention relates also to a premix for an aerated dairy product.

### Background of the invention

Ice cream and aerated dairy products, mousses, are well known all over the world. The basic steps in the ice cream manufacturing include mixing the starting ingredients, pasteurizing the mixture, homogenizing the pasteurized mixture, then aging and whipping/freezing the mixture, followed by packaging and hardening. In ice cream manufacture, there are several process steps which require low temperatures. In addition, ice cream is typically stored at a temperature -18 °C and below. The basic steps in manufacturing dairy mousses include mixing the starting ingredients, pasteurizing and optionally homogenizing the mixture and aerating the mixture into the form of a mousse. Typically mousses require to be chilled or refrigerated for preservation.

Patent publication WO 2009/032976 describes improved ice cream formulations and methods for their manufacturing. Patent publication WO 2013/117534 describes a frozen confectionery product and a process for preparing it. Patent publication WO 2013/083697 discloses a shelf-stable dairy mousse and a process for preparing it.

EP 0818149 A2 discloses an aerated mousse-like food composition wherein an oil-in water emulsion comprising fats, milk proteins, possibly sugars, and water is pasteurized, precooled and aerated by injecting an inert gas. The food composition is suitable for use as a filling composition in contact with bakery products.

US 2007/0003681 A1 discloses an aerated product comprising protein, oil and cyclodextrin in an amount effective to provide a stable aerated product. Polyols such as sorbitol and mannitol can be employed to modify the mouthfeel of the topping. A carbohydrate, such as sucrose, dextrose, glucose, lactose, maltose and invert sugar can be used in the composition to provide a desired sweetness.

### Brief description of the invention

An object of the present invention is to provide a method for preparing an aerated dairy product comprising the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled mixture,
- subjecting the mixture to an aeration treatment for providing an aerated dairy product,

wherein the method does not involve a homogenization step.

The method of the present invention optionally comprises also the steps of:

- ageing the cooled mixture,
- packing the aerated product,
- storing the product.

An object of the present disclosure is to provide an aerated dairy product comprising at least one saccharide and/or a sugar alcohol, a mixture of emulsifiers and thickeners and at least one fresh dairy product selected from quark, a blend of quark and cream, cream cheese, cottage cheese, yogurt and/or neutral natural dairy proteins optionally coagulated by enzymes, and having an overrun of 20 - 120%.

An object of the present invention is to provide a method of producing a premix for an aerated dairy product comprising the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,

- pasteurizing the mixture,
- cooling the pasteurized mixture to provide a cooled premix,
- optionally ageing the cooled premix,
- optionally drying the premix,
- storing the premix,

wherein the method does not involve a homogenization step.

Further, an object of the present disclosure is to provide a premix for an aerated dairy product comprising at least one saccharide and/or a sugar alcohol, a mixture of emulsifiers and thickeners and at least one dairy product selected from quark, a blend of quark and cream, cream cheese, cottage cheese, yogurt and/or neutral natural dairy proteins optionally coagulated by enzymes.

The objects of the invention are achieved by methods and products characterized by what is stated in the independent claims. The preferred embodiments of the invention are disclosed in the dependent claims.

**Detailed description of the invention**

The present invention provides a method for preparing an aerated dairy product comprising the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled mixture,
- subjecting the mixture to an aeration treatment for providing an aerated dairy product,

wherein the method does not involve a homogenization step.

The method of the present invention optionally comprises also the steps of:

- ageing the cooled mixture,
- packing the aerated product,
- storing the product.

Accordingly, in one embodiment the method of the present invention comprises the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled mixture,
- optionally ageing the cooled mixture,
- subjecting the mixture to an aeration treatment for providing an aerated dairy product,
- optionally packing the aerated product,
- optionally storing the product

wherein the method does not involve a homogenization step.

In a certain embodiment, the present invention provides a method for preparing an aerated dairy product comprising the steps of:

- providing and mixing starting ingredients comprising a liquid, optionally cream, at least one fresh dairy product, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners,
- pasteurizing the mixture,
- cooling the pasteurized mixture to provide a cooled mixture,
- optionally ageing the cooled mixture
- subjecting the mixture to an aeration treatment for providing an aerated dairy product,
- optionally packing the aerated product,
- optionally storing the product,

wherein the method does not involve a homogenization step.

In a certain embodiment, the starting ingredients of the method of the present invention comprise in addition to the at least one saccharide and sugar alcohol, a liquid, optionally cream, a fresh dairy product, and a mixture of emulsifiers and thickeners.

The present invention provides also a method of producing a premix for an aerated dairy product comprising the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled premix,
- optionally ageing the cooled premix,
- optionally drying the premix,
- optionally packing the premix,
- storing the premix,

wherein the method does not involve a homogenization step.

The starting ingredients of the method for preparing an aerated dairy product of the present invention and the method for producing a premix for an aerated dairy product include in addition to at least one saccharide and a sugar alcohol selected from dextrose, sorbitol, glycerol, maltitol, erythritol, xylitol, mannitol, lactitol, lactulose, galacto-oligosaccharide or any mixture thereof, a liquid, optionally cream, at least one fresh dairy product, and a mixture of emulsifiers and thickeners. In a certain embodiment, the starting ingredients of the method for preparing an aerated dairy product and a premix for an aerated dairy product comprises a liquid, optionally cream, a fresh dairy product, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners.

In the present invention, the liquid refers to water, cream, milk, sour milk, buttermilk, protein concentrates, casein concentrates, whey, such as cheese whey and sour whey, milk permeate and other fractions of milk, juices, alcohols, beverages. In one embodiment, the liquid is selected from water, cream, milk or mixtures thereof.

In the present invention, the fresh dairy product refers to quark, a blend of quark and cream, cream cheese, cottage cheese, yogurt, neutral natural dairy proteins, and/or neutral dairy proteins coagulated by an enzyme, such as protease, transglutaminase, tyrosinase, laccase, chymosine and proteinglutaminase. In one embodiment, the fresh dairy product is selected from quark, a blend of quark and cream, cream cheese, cottage cheese and/or yogurt. In a certain embodiment, the fresh dairy product is quark.

In the present invention quark refers to an acidified dairy product base produced from milk with an acidifier. The acidifier may be biochemical or chemical. Mesophilic starter with an enzyme, such as chymosin, or without an enzyme can be used in the acidification. Acidification or sedimentation of protein can be achieved also by using chemicals, such as lactic acid, citric acid and /or GDL. Further, a coagulant such as chymosin can be used alone or together with a starter or a chemical acidifier. The sediment of protein is separated off by separation technology or by microfiltration or ultrafiltration or without any separation.

The pH of the aerated dairy product prepared by the method of the present invention is from about 3.5 to about 7. In an embodiment, the pH is from about 3.5 to about 5.5. In another embodiment, the pH is from about 4.5 to about 6.0. In a certain embodiment, the pH is from about 3.5 to about 5. In a certain embodiment, the pH is from about 4.5 to about 5.5. In a certain embodiment, the pH is from about 4.5 to about 6.0. In a certain embodiment, the pH is from about 5 to about 7.

In the present invention, at least one saccharide and a sugar alcohol refers to dextrose, sorbitol, glycerol, maltitol, erythritol, xylitol, mannitol, lactitol, lactulose, galacto-oligosaccharide or any mixture thereof. In one embodiment, the at least one saccharide and a sugar alcohol is selected from dextrose, sorbitol and glycerol. In a certain embodiment, the at least one saccharide and a sugar alcohol are selected from dextrose and sorbitol. In a certain embodiment, the at least one saccharide and a sugar alcohol are selected from dextrose and glycerol. The sugar content of the aerated dairy product prepared by the method of the present invention is from about 6% to about 40% based on the total weight of the product. In one embodiment, the sugar content is from about 6% to about 25%. In another embodiment, the sugar content is from about 16% to about 25%.

In the present invention, the mixture of emulsifiers and thickeners refers to a mixture of food grade emulsifiers and thickeners. In one embodiment the mixture of emulsifiers and thickeners comprises gelatin, lactic acid esters of mono- and diglycerides of fatty acids (lactoglycerides, E472b), microcrystalline cellulose (E460) and/or carboxymethyl cellulose (E466). In a certain embodiment, the mixture of emulsifiers and thickeners comprises gelatin. The gelatin may be synthetic or animal derived.

In the present invention the starting ingredients are mixed in any order and/or method known by the person skilled in the art. In one embodiment, the liquids are first mixed together and then the other ingredients are blended into the liquid mixture.

In the present invention the mixture of the starting ingredients is heat treated using any method known by the person skilled in the art, such as pasteurization, high-pasteurization, thermization or UHT-treatment. It is important that the heat treatment of the starting ingredients is efficient from the microbiological point of view. In one embodiment, the mixture of the starting ingredients is pasteurized using any method known by the person skilled in the art. The pasteurization is typically carried out at a temperature ranging from about 70°C to about 95°C for about 5 to about 15 minutes. In one embodiment, the pasteurization is carried out at about 72°C for about 1-10 minutes.

In the present invention, the pasteurized mixture is cooled in order to provide a cooled mixture having a temperature of about 4 to 10°C. In one embodiment, the cooled mixture has a temperature of about 6°C. The cooling is done using methods known by the person skilled in the art. In one embodiment, the cooling is performed using a scraped surface heat exchanger.

In the present invention, the aeration treatment is performed utilizing techniques and equipment known by the person skilled in the art to incorporate gas into the mix of the mass. Such techniques and equipment are used in manufacturing aerated products and ice cream, for example. Haas-Mondomix, a Dutch company, offers machinery for aerating dairy masses at a temperature at or above 4°C. Ice cream freezer, on the other hand, operate typically at a temperature range from about -5°C to about -15°C. The aeration of the product can be made by using a mechanical mixing treatment, i.e., a freezer, or by using a physical mixing treatment, such as HPP- (high pressure process) or ultrasound techniques. Thus, the aeration of the product can be made by whipping at from about 4°C to about 5°C, with an ice cream freezer, or utilizing HPP (high pressure process) or ultrasound techniques. In one embodiment, the aeration treatment is performed by whipping at about 4°C, with an ice cream freezer, utilizing HPP-technique or utilizing ultrasound technique. In certain embodiment, the aeration treatment is performed with an ice cream freezer.

In the aeration treatment step gas, such as air, $CO_2$, $N_2$, argon or any mixture thereof, is incorporated into the texture of the product in varying amounts. In embodiment, the gas is air. The amount of gas incorporated into the product is illustrated by overrun. The term "overrun" is defined to be the % increase in the volume of the product greater than the amount of the mixture used to produce the product.

Overrun can be calculated according to the equation:

$$\frac{\text{volume of the aerated product} - \text{volume of the product before aeration}}{\text{volume of the product before aeration}} \times 100$$

In the method of the present invention, the overrun is at least 20%. In one embodiment the overrun is 20 - 120%. In one embodiment, the overrun is 60%. In another embodiment, the overrun is at least 60%. In another embodiment the overrun is 60 - 120%. In one embodiment, the overrun is 85%. In another embodiment, the overrun is at least 85%. In a further embodiment, the overrun is 85 - 120%. In one embodiment, the overrun is 100% or 120%. In another embodiment, the overrun is at least 100%. In a further embodiment, the overrun is 100 - 120%.

In the present invention, the cooled mixture is optionally aged. The aging is performed using methods known by the person skilled in the art. In one embodiment of the method of the present invention, the cooled mixture is allowed to age for about 4 hours at the maximum. In another embodiment, the cooled mixture is allowed to age for about 1 to about 4 hours. In another embodiment, the cooled mixture is allowed to age for about 1 hour. The aging is done at a temperature of 4 to 8°C. In one embodiment the aging is done at 6 °C. In certain embodiment, the cooled mixture is allowed to age for about 1 hour at 6°C. In certain embodiment, the process of the present invention does not involve an aging step.

In the present invention, the aerated product or the premix is optionally packed. The packing is performed using methods known by the person skilled in the art.

In the present invention, the aerated and/or packed aerated product is optionally stored. The product could be stored at ambient temperature up to +40°C, in a refrigerator, i.e., at about +4°C or in a freezer, i.e., at from about -18°C to about -23°C. At a temperature of -70°C, the product freezes and hardens. However, when the hardened product is then transferred and kept at a temperature ranging from about +6°C to room temperature, it does not defrost like ice cream but maintains its mousse-like structure. These temperatures apply even for industrial storage purposes and thus temperatures from about -30°C and below are unnecessary.

In the present invention the term "frozen product" refers to a product which is not in a frozen state at temperatures up to -30°C, in which temperatures products normally are frozen. The matrix of the product in the present invention is formed so that most water is bound to lipids and also the water contains soluble salts, sugars and polyols resulting in that the freezing point of water is below -30°C. In one embodiment, the product is stored at a temperature of at least -18°C.

In one embodiment, the method for preparing an aerated dairy product comprises the steps of:

- providing and mixing starting ingredients comprising at least one saccharide and a sugar alcohol selected from dextrose, sorbitol, glycerol, maltitol, erythritol, xylitol, mannitol, lactitol, lactulose, galacto-oligosaccharide or any mixture thereof, a liquid, optionally cream, at least one fresh dairy product, and a mixture of emulsifiers and thickeners,

- pasteurizing the mixture,
- cooling the pasteurized mixture to provide a cooled mixture,
- subjecting the mixture to an aeration treatment for providing an aerated dairy product,

wherein the method does not involve a homogenization step.

In one embodiment, the method optionally comprises also the steps of:

- ageing the cooled mixture,
- packing the aerated product,
- storing the product at ambient temperature up to +40°C, in a refrigerator, or in a freezer.

In a certain embodiment, the method for preparing an aerated dairy product comprises the steps of:

- providing and mixing starting ingredients comprising at least one saccharide and a sugar alcohol selected from dextrose, sorbitol, glycerol, maltitol, erythritol, xylitol, mannitol, lactitol, lactulose, galacto-oligosaccharide or any mixture thereof, water, cream, quark, and a mixture of emulsifiers and thickeners,
- pasteurizing the mixture,
- cooling the pasteurized mixture to provide a cooled mixture,
- subjecting the mixture to an aeration treatment for providing an aerated dairy product,
- optionally ageing the cooled mixture,
- packing the aerated product,
- storing the product in a freezer,

wherein the method does not involve a homogenization step.

It was surprisingly found that in the methods of the present invention there is no need to homogenize the starting ingredients before or after pasteurization, as is needed in manufacture of ice cream and dairy mousses. It was found that omitting homogenization was advantageous, or even essential for the formation of the aerated texture of the product.

Accordingly, the methods for preparing an aerated dairy product and a premix for an aerated dairy product comprise the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled mixture, and
- subjecting the cooled mixture to an aeration treatment for providing an aerated dairy product,

provided that the methods do not comprise a homogenization step.

In addition, it was surprisingly found that in the method of the present invention there is no need to age the product for at least 4 hours, as is needed in manufacturing ice cream. Further, it was surprisingly found that in the method of the present invention there is no need to age the product at all.

In addition, it was surprisingly found that in the method of the present invention there is no need for annealing or hardening the product after aeration, as is needed in manufacturing ice cream. In the method of the present invention, time temperature treatment (at -35°C for 1 to 4 hours), specific for products to be stored at frozen stage, is not needed.

Accordingly, in one embodiment the method for preparing an aerated dairy product of the present invention comprises the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled mixture, and
- subjecting the cooled mixture to an aeration treatment for providing an aerated dairy product,

provided that the method does not comprise homogenization and annealing steps.

Accordingly, in one embodiment the method for preparing an aerated dairy product of the present invention comprises the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled mixture, and
- subjecting the cooled mixture to an aeration treatment for providing an aerated dairy product,

provided that the method does not comprise homogenization and hardening steps.

Thus, the overall process of the present invention is much simpler and cheaper than the process for producing ice cream. It also provides investment and energy savings compared to conventional ice cream manufacturing.

The present invention provides also an aerated dairy product. The aerated dairy product of the present invention comprises at least one saccharide and a sugar alcohol selected from dextrose, sorbitol, glycerol, maltitol, erythritol, xylitol, mannitol, lactitol, lactulose, galacto-oligosaccharide or any mixture thereof, at least one fresh dairy product and a mixture of emulsifiers and thickeners. In the present invention, the fresh dairy product refers to and is selected from quark, a blend of quark and cream, cream cheese, cottage cheese, yogurt, neutral natural dairy proteins, and/or neutral dairy proteins coagulated by an enzyme, such as protease, transglutaminase, tyrosinase, laccase, chymosine and proteinglutaminase, and mixtures thereof. In a certain embodiment, the aerated dairy product of the present invention comprises at least one saccharide and a sugar alcohol selected from dextrose, sorbitol, glycerol, maltitol, erythritol, xylitol, mannitol, lactitol, lactulose, galacto-oligosaccharide or any mixture thereof, a liquid, optionally cream, a fresh dairy product and a mixture of emulsifiers and thickeners. The aerated dairy product is either neutral or soured. The aerated soured dairy product of the present invention comprises a soured fresh dairy product selected from quark, a blend of quark and cream, cream cheese, cottage cheese and/or yogurt, at least one saccharide and a sugar alcohol, and a mixture of emulsifiers and thickeners.

The overrun of the aerated dairy product of the present invention is at least 20%. In one embodiment the overrun is about 20 - about 120%. In another embodiment the overrun is 20 - 120%. In one embodiment, the overrun is about 60%. In another embodiment, the overrun is at least 60%. In another embodiment the overrun is about 60 - about 120%. In one embodiment, the overrun is 85%. In another embodiment the overrun is at least 85%. In a further embodiment, the overrun is about 60 - about 100% or about 60 - about 85%. In another further embodiment, the overrun is about 85 - about 120%. In an even further embodiment, the overrun is about 100% or about 120%. In one embodiment, the overrun is at least 100%. In another embodiment, the overrun is 100 - 120%.

In one embodiment, the aerated dairy product is produced according to the method of the present invention.

The aerated dairy product, mousse, of the present invention can be stored in a refrigerator i.e., at about +4°C or in a freezer i.e., at from about -18 to about -23°C. The aerated dairy product can be stored also at ambient temperature up to +40°C.

The aerated dairy product stored in a refrigerator is a mousse having good quality. When the product is put into a freezer it becomes a ready to spoon ice cream having good texture and mouth feel. After being left at the room temperature, it becomes a mousse again.

The aerated dairy product stored in a freezer (up to -23°C) is like ice cream which is ready to spoon. The texture and the mouth feel of the whipped product are good. When this product is left at the room temperature it becomes a mousse.

The aerated product is spoonable at temperature -23°C. When taken the product to room temperature the aerated structure remains without melting phenomenon to liquid compared to traditional ice cream.

The aerated dairy product structure at ambient temperature is like whipped viscous not liquid foam. The texture and the mouth feel of the whipped product are good. When this product is put into a freezer/refrigerator it has still the flexible structure only with slightly free water is less moving and after taking the product from frozen temperature to room ambient temperature the texture is still stable instead like ice cream the texture is melted to liquid.

The protein content of the aerated dairy product of the present invention is from about 2% to about 11 % based on the total weight of the product. The proteins of the product of the present invention are milk based or milk derived proteins. The quality of proteins in the product can be controlled by changing the ratio of casein proteins to whey proteins. In cow's milk the typical ratio of casein protein to whey protein is about 80:20. With addition of a whey protein concentrate to the starting materials, the proportion of whey proteins in the product can be increased, for example. Without wishing to bound to any theory casein protein structure can be opened by using acids, enzymes, chemicals or physically (using ultrasound-treatment, for example). Also whey protein can be denatured by heat treatment or chemically. Also during heating some proteins are cross-linked by reduced carbohydrates.

The fat content of the aerated dairy product of the present invention is from about 0% to about 50% based on the total weight of the product. In an embodiment, the fat content is from about 9% to about 15%. In another embodiment, the fat content is from about 15% to about 35%.

The sugar content of the aerated soured dairy product of the present invention is from about 6% to about 40% based on the total weight of the product. In one embodiment, the sugar content is from about 6% to about 25%. In another embodiment, the sugar content is from about 16% to about 25%. In the present invention, at least one saccharide and a sugar alcohol refers to dextrose, sorbitol, glycerol, maltitol, erythritol, xylitol, mannitol, lactitol, lactulose, galacto-oligosaccharide or any mixture thereof. In one embodiment, the at least one saccharide and a sugar alcohol is selected from dextrose, sorbitol and glycerol. In a certain embodiment, the at least one saccharide and sugar alcohol are selected from dextrose and sorbitol. In a certain embodiment, the at least one saccharide and sugar alcohol are selected from dextrose and glycerol.

The pH of the aerated dairy product of the present invention is from about 3.5 to about 7. In an embodiment, the pH is from about 3.5 to about 5.5. In a certain embodiment, the pH is from about 3.5 to about 5. In a certain embodiment, the pH is from about 4.5 to about 5.5. In another embodiment, the pH is from about 5 to about 6.0. In another embodiment, the pH is from about 5 to about 7. In a certain embodiment, the pH is from about 4.5 to about 6.0.

In one embodiment, the aerated dairy product according to the present invention comprises quark, at least one saccharide and a sugar alcohol, and a mixture of emulsifiers and thickeners. In a certain embodiment, the pH of the product is 4.0 - 5.0. In a certain embodiment, the pH is 4.5 - 4.7. In another embodiment, the product additionally has an overrun of about 60 - 100%. In a certain embodiment, the product has an overrun of 85%, at the minimum.

The present invention provides also a premix for an aerated dairy product. The premix of the present invention comprises at least one saccharide and a sugar alcohol selected from dextrose, sorbitol, glycerol, maltitol, erythritol, xylitol, mannitol, lactitol, lactulose, galacto-oligosaccharide or any mixture thereof, at least one fresh dairy product and a mixture of emulsifiers and thickeners. In the present invention, the fresh dairy product refers to and is selected from quark, a blend of quark and cream, cream cheese, cottage cheese, yogurt, neutral natural dairy proteins, and/or neutral dairy proteins coagulated by an enzyme, such as protease, transglutaminase, tyrosinase, laccase, chymosine and proteinglutaminase. In a certain embodiment, the premix for an aerated dairy product comprises a liquid, optionally cream, a fresh dairy product, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners. The premix of the present invention is either neutral or soured. In one embodiment, the premix comprises at least one soured fresh dairy product selected from quark, a blend of quark and cream, cream cheese, cottage cheese and/or yogurt, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners. In another embodiment, the premix according to the present invention comprises quark, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners.

The premix of the present invention can be stored in fluid form or in dry form, in a refrigerator i.e., at about +4°C or in a freezer i.e., at from about -18 to about -23°C or at ambient temperature up to +40°C.

The protein content of the premix of the present invention is from about 2% to about 50% based on the total water content of the product. The proteins of the product of the present invention are milk based or milk derived proteins. The quality of proteins in the product can be controlled by changing the ratio of casein proteins to whey proteins. In cow's milk the typical ratio of casein protein to whey protein is about 80:20. With addition of a whey protein concentrate to the starting materials, the proportion of whey proteins in the product can be increased, for example. Without wishing to be bound to any theory, casein protein structure can be opened by using acids, enzymes, chemicals or physically (ultrasound treatment, for example). Also whey protein can be denatured by heat or chemically. Also during the heating some protein is cross linked by reduced carbohydrates.

The fat content of the premix of the present invention is from about 0% to about 50% based on the total water content of the product. In an embodiment, the fat content is from about 9% to about 15%. In another embodiment, the fat content is from about 15% to about 35%.

The sugar content of the premix of the present invention is from about 6% to about 40% based on the total water content of the product. In one embodiment, the sugar content is from about 6% to about 25% In another embodiment, the sugar content is from about 16% to about 25%. In the present invention, at least one saccharide and a sugar alcohol refers to dextrose, sorbitol, glycerol, maltitol, erythritol, xylitol, mannitol, lactitol, lactulose, galacto-oligosaccharide or any mixture thereof. In one embodiment, at least one saccharide and a sugar alcohol is selected from dextrose, sorbitol and glycerol.

The pH of the premix of the present invention is from about 3.5 to about 7. In an embodiment, the pH is from about 3.5 to about 5.5. In another embodiment, the pH is from about 3.5 to about 6.0. In a certain embodiment, pH is from about 3.5 to about 5. In a certain embodiment, pH is from 4.5 to 5.5. In a certain embodiment, the pH of the premix is from 4.0 to 5.0. In a certain embodiment, the pH of the premix is from 4.0 to 6.0. In another embodiment, the pH is from about 5 to about 7.

The following examples represent illustrative embodiments of the invention without limiting the invention in any way.

EXAMPLE 1

| Ingredients | Amount % |
|---|---|
| water | 8 |
| cream (fat content 32%) | 27 |
| emulsifier-thickener mixture (gelatin, E472b, E466) | 1.4 |
| sorbitol | 7 |
| dextrose | 9 |
| strawberry jam (brix 48, sugar 39%) | 18 |
| quark (protein 10%, fat 9.2%, sugar 2.1%, pectin 0.21%) | 29.6 |

Water and cream were mixed together. Then the emulsifier-thickener mixture and the rest of the ingredients were added. This blend was mixed thoroughly. The pH of the blend was 4.5. After pasteurization at 72°C, the mixture was cooled to 10°C using a scraped surface heat exchanger. The mixture was then stored at 6°C for 60 minutes (aging). After that the mixture was whipped using an ice cream freezer (Incotech, DK) to have an overrun of 60%, 85% or 100%. The products were packed and stored at -18°C or at +6°C.

The products stored at +6°C were mousses having good quality. When the products were put into a freezer (-18°C) they became readily spoonable ice creams having good texture and mouth feel. After being left at the room temperature, they became mousses again.

The products stored at -18°C were like ice cream which was readily spoonable. The texture and the mouth feel of the products were good. When they were left at the room temperature they became mousses.

EXAMPLE 2

| Ingredients | Amount % |
|---|---|
| water | 8 |
| cream (fat content 32%) | 27 |
| emulsifier-thickener mixture (gelatin, E472b, E460, E466) | 1.6 |
| sorbitol | 7 |
| dextrose | 9 |
| strawberry jam (brix 48, sugar 39%) | 18 |
| quark (protein 10%, fat 9.2%, sugar 2.1%, pectin 0.21%) | 29.4 |

Water and cream were mixed together. Then the emulsifier-thickener mixture and the rest of the ingredients were added. This blend was mixed thoroughly. The pH of the blend was 4.5. After pasteurization at 72°C, the mixture was cooled to 10°C using a scraped surface heat exchanger. After that the mixture was whipped using an ice cream freezer (Incotech, DK) to have an overrun of 60%, 85% or 100%. The products were packed and stored at -18°C or at +6°C.

The products stored at +6°C were mousses having good quality. When the products were put into a freezer (-18°C) they became readily spoonable ice creams having good texture and mouth feel. After being left at the room temperature, they became mousses again.

The products stored at -18°C were like ice cream which was ready to spoon. The texture and the mouth feel of the products were good. When these products were left at the room temperature they became mousses.

EXAMPLE 3

| Ingredients | Amount % |
|---|---|
| water | 11.5 |
| cream (fat content 32%) | 27 |
| emulsifier-thickener mixture (gelatin, E472b, E460, E466) | 1.6 |
| glycerol | 3.5 |
| dextrose | 9 |
| strawberry jam (brix 48, sugar 39%) | 18 |
| quark (protein 10%, fat 9.2%, sugar 2.1%, pectin 0.21%) | 29.4 |

Water and cream were mixed together. Then the emulsifier-thickener mixture and the rest of the ingredients were added. This blend was mixed thoroughly. The pH of the blend was 4.5. After pasteurization at 72°C, the mixture was cooled to 10°C using a scraped surface heat exchanger. The mixture was then stored at 6°C for 60 minutes (aging). After that the mixture was whipped using an ice cream freezer (Incotech, DK) to have an overrun of 60%, 85% or 100%. The products were packed and stored at -18°C or at + 6°C.

The products stored at +6°C were mousses having good quality. When the products were put into a freezer (-18°C) they became readily spoonable ice creams having good texture and mouth feel. After being left at the room temperature, they became mousses again.

The products stored at -18°C were like ice cream which was readily spoonable. The texture and the mouth feel of the products were good. When these products were left at the room temperature they became mousses.

EXAMPLE 4

| Ingredients | Amount % |
|---|---|
| water | 8 |
| cream (fat content 32%) | 20 |
| emulsifier-thickener mixture (gelatin, E472b, E466) | 1.6 |
| sorbitol | 7 |
| dextrose | 9 |
| flavour component | 18 |
| quark (protein 10%, fat 9.2%, sugar 2.1%, pectin 0.21%) | 36.4 |

Water and cream were mixed together. Then the emulsifier-thickener mixture and the rest of the ingredients were added. This blend was mixed thoroughly. The pH of the blend was 4.55. After pasteurization at 72°C, the mixture was cooled to 10°C using a scraped surface heat exchanger. The mixture was then stored at 6°C for 60 minutes (aging). After that the mixture was whipped using an ice cream freezer (Incotech, DK) to have an overrun of 85 %. The products were packed and stored at -23 °C or at + 6°C.

The product stored at + 6 °C was a mousse of good quality. When the product was put into a freezer (-18 °C) it became a readily spoonable ice cream having good texture and mouth feel. After being left at the room temperature, it became a mousse again.

The product stored at -18 °C was like ice cream which was ready to spoon. The texture and the mouth feel of the products were good. When this product was left at the room temperature it became a mousse.

EXAMPLE 5

| Ingredients | Amount % |
| --- | --- |
| water | 11.5 |
| cream (fat content 32%) | 27 |
| emulsifier-thickener mixture (gelatin, E472b, E460, E466) | 1.6 |
| glycerol | 3.5 |
| dextrose | 9 |
| strawberry jam (brix 48, sugar 39%) | 18 |
| quark (protein 11%, fat 0.3%) | 29.4 |

Water and cream were mixed together. Then the emulsifier-thickener mixture and the rest of the ingredients were added. This blend was mixed thoroughly. The pH of the blend was 4.5. After pasteurization at 72°C, the mixture was cooled to 6°C using a scraped surface heat exchanger. The mixture was then stored at 6°C for 60 minutes. After that the mixture was whipped using an ice cream freezer (Incotech, DK) to have an overrun of 60%, 85% or 100%. The products were packed and stored at -18°C or at + 6°C.

The products stored at + 6°C were mousses having good quality. When the products were put into a freezer (-18°C) they became readily spoonable ice creams having good texture and mouth feel. After being left at the room temperature, they became mousses again.

The products stored at -18°C were like ice cream which was readily spoonable. The texture and the mouth feel of the products were good. When these products were left at the room temperature they became mousses.

EXAMPLE 6

| Ingredients | Amount % |
| --- | --- |
| water | 11.5 |
| cream (fat content 32%) | 27 |
| emulsifier-thickener mixture (gelatin, E472b, E460, E466) | 1.6 |
| glycerol | 3.5 |
| dextrose | 9 |
| strawberry jam (brix 48, sugar 39%) | 18 |
| Cream cheese (protein 7.7%, fat 13%) | 29.4 |

Water and cream were mixed together. Then the emulsifier-thickener mixture and the rest of the ingredients were added. This blend was mixed thoroughly. The pH of the blend was 4.5. After pasteurization at 72°C, the mixture was cooled to 6°C using a scraped surface heat exchanger. The mixture was then stored at 6°C for 60 minutes. After that the mixture was whipped using an ice cream freezer (Incotech, DK) to have an overrun of 85%. The products were packed and stored at -18°C or at + 6°C.

The product stored at + 6°C was a mousse having good quality. When the product was put into a freezer (-18°C) it became readily spoonable ice cream having good texture and mouth feel. After being left at the room temperature, it became mousses again.

The product stored at -18°C was like ice cream which was readily spoonable. The texture and the mouth feel of the product were good. When the product was left at the room temperature it became a mousse.

EXAMPLE 7

| Ingredients | Amount % |
|---|---|
| water | 8 |
| cream (fat content 32%) | 27 |
| emulsifier-thickener mixture (gelatin, E472b, E466) | 1.4 |
| sorbitol | 7 |
| dextrose | 9 |
| strawberry jam (brix 48, sugar 39%) | 18 |
| fat free yogurt (protein 12%) | 29.6 |

Water and cream were mixed together. Then the emulsifier-thickener mixture and the rest of the ingredients were added. This blend was mixed thoroughly. The pH of the blend was 4.3. After pasteurization at 72°C, the mixture was cooled to 6°C using a scraped surface heat exchanger. The mixture was then stored at 6°C for 60 minutes. After that the mixture was whipped using an ice cream freezer (Incotech, DK) to have an overrun of 85%. The products were packed and stored at -18°C or at + 6°C.

The product stored at + 6°C was a mousse having good quality. When the product was put into a freezer (-18°C), it became readily spoonable ice cream having good texture and mouth feel. After being left at the room temperature, it became a mousse again.

The product stored at -18°C was like ice cream which was readily spoonable. The texture and the mouth feel of the product was good. When the product was left at the room temperature, it became a mousse.

EXAMPLE 8

| Ingredients | Amount % |
|---|---|
| water | 8 |
| cream (fat content 32%) | 27 |
| emulsifier-thickener mixture (gelatin, E472b, E466) | 1.4 |
| sorbitol | 7 |
| dextrose | 9 |
| strawberry jam (brix 48, sugar 39%) | 18 |
| cottage cheese (12% protein) | 29.6 |

Water and cream were mixed together. Then the emulsifier-thickener mixture and the rest of the ingredients were added. This blend was mixed thoroughly. The pH of the blend was 4.9. After pasteurization at 72°C, the mixture was cooled to 6°C using a scraped surface heat exchanger. The mixture was then stored at 6°C for 60 minutes. After that the mixture was whipped using an ice cream freezer (Incotech, DK) to have an overrun of 85%. The products were packed and stored at -18°C or at +6°C.

The product stored at +6°C was a mousse having good quality. When the product was put into a freezer (-18°C), it became readily spoonable ice cream having good texture and mouth feel. After being left at the room temperature, it became a mousse again.

The product stored at -18°C was like ice cream which was readily spoonable. The texture and the mouth feel of the product were good. When the product was left at the room temperature, it became a mousse.

EXAMPLE 9

| Ingredients | Amount % |
|---|---|
| water | 11.5 |
| cream (fat content 32%) | 27 |
| emulsifier-thickener mixture (gelatin, E472b, E460, E466) | 1.6 |
| glycerol | 3.5 |
| dextrose | 9 |
| strawberry jam (brix 48, sugar 39%) | 18 |
| Fat free cheese (protein 12%, chymosin) | 29.4 |

Water and cream were mixed together. Then the emulsifier-thickener mixture and the rest of the ingredients were added. This blend was mixed thoroughly. The pH of the blend was 5.5. After pasteurization at 72°C, the mixture was cooled to 6°C using a scraped surface heat exchanger. The mixture was then stored at 6°C for 60 minutes. After that the mixture was whipped using an ice cream freezer (Incotech, DK) to have an overrun of 85%. The product was packed and stored at -18°C or at +6°C.

The product stored at +6°C was a mousse having good quality. When the product was put into a freezer (-18 °C), it became readily spoonable ice cream having good texture and mouth feel. After being left at the room temperature, it became a mousse again.

The product stored at -18°C was like ice cream which was readily spoonable. The texture and the mouth feel of the product were good. When the product was left at the room temperature, it became a mousse.

EXAMPLE 10

| Ingredients | Amount % |
|---|---|
| water | 25.5 |
| emulsifier-thickener mixture (gelatin, E472b, E460, E466) | 3 |
| glycerol | 3.5 |
| dextrose | 9 |
| strawberry jam (brix 48, sugar 39%) | 18 |
| Quark (protein 20%) | 41 |

The emulsifier-thickener mixture and the rest of the ingredients were blended into the water. This blend was mixed thoroughly. The pH of the blend was 4.5. After pasteurization at 72°C, the mixture was cooled to 6°C using a scraped surface heat exchanger. The mixture was then stored at 6°C for 60 minutes. After that the mixture was whipped using an ice cream freezer (Incotech, DK) to have an overrun of 85%.The products were packed and stored at -18°C or at +6°C.

The product stored at +6°C was a mousse having good quality. When the product was put into a freezer (-18°C), it became readily spoonable ice cream having good texture and mouth feel. After being left at the room temperature, it became a mousse again.

The product stored at -18°C was like ice cream which was readily spoonable. The texture and the mouth feel of the product were good. When the product was left at the room temperature, it became a mousse.

EXAMPLE 11

| Ingredients | Amount % |
|---|---|
| water | 8 |
| cream (fat content 32%) | 27 |
| emulsifier-thickener mixture (gelatin, E472b, E466) | 1.4 |
| sorbitol | 7 |
| dextrose | 9 |
| strawberry jam (brix 48, sugar 39%) | 18 |
| quark (protein 10%, fat 9.2%, sugar 2.1%, pectin 0.21%) | 29.6 |

Water and cream were mixed together. Then the emulsifier-thickener mixture and the rest of the ingredients were added. This blend was mixed thoroughly. The pH of the blend was 4.5. After pasteurization at 72 °C, the mixture was cooled to 10 °C using a scraped surface heat exchanger. The mixture was then stored at 6 °C for 60 minutes (aging). The product was then packed as a premix and stored at a temperature of +4 °C.

The premix was then used in the manufacture of an aerated dairy product by subjecting it to an aeration treatment.

Alternatively, the premix could be dried using a method commonly used in the art, such as freeze drying or spray drying. The dried premix product can be stored even at ambient temperature. The dried premix can then be used in the manufacture of an aerated dairy product by dissolving it to an appropriate liquid and subjecting to an aeration treatment.

It will be obvious to a person skilled in the art that, as the technology advances, the inventive concept can be implemented in various ways. The invention and its embodiments are not limited to the examples described above but may vary within the scope of the claims.

## Claims

1. A method for preparing an aerated dairy product comprising the steps of:

   - providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
   - pasteurizing the mixture,
   - cooling the pasteurized mixture to provide a cooled mixture,
   - subjecting the mixture to an aeration treatment for providing an aerated dairy product,

   wherein the method does not involve a homogenization step.

2. The method according to claim 1, wherein the method further comprises at least one of the steps of:

   - ageing the cooled mixture,
   - packing the aerated product,
   - storing the product.

3. The method according to claim 1 or claim 2 wherein the method comprises the steps of:

   - providing and mixing starting ingredients comprising in addition to the at least one saccharide and a sugar alcohol selected from dextrose, sorbitol, glycerol, maltitol, erythritol, xylitol, mannitol, lactitol, lactulose, galacto-oligosaccharide or any mixture thereof, water, cream, quark, and a mixture of emulsifiers and thickeners,
   - pasteurizing the mixture,
   - cooling the pasteurized mixture to provide a cooled mixture,
   - subjecting the mixture to an aeration treatment for providing an aerated dairy product,
   - optionally ageing the cooled mixture,
   - packing the aerated product,
   - storing the product in a freezer,

wherein the method does not involve a homogenization step.

4. The method according to any one of the preceding claims, wherein the aeration treatment is performed by whipping with an ice cream freezer, utilizing HPP-technique or utilizing ultrasound technique.

5. The method according to any one of the preceding claims, wherein the mixture is aerated to provide an aerated dairy product having an overrun in the range of 20 - 120%.

6. The method according to claim 5, wherein the overrun in the range of 60 - 120%.

7. The method according to claims 2-6, wherein the cooled mixture is aged for 1 to 4 hours.

8. The method according to any one of claims 2 - 7, wherein the product is stored in a refrigerator or in a freezer or at ambient temperature up to 40°C.

9. An aerated dairy product manufactured according to any one of claims 1 - 8.

10. An aerated dairy product comprising at least one fresh dairy product, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners, and having an overrun in the range of 20 - 120%.

11. The aerated dairy product according to claim 10 wherein an overrun of the product is in the range of 60 - 120%.

12. The aerated dairy product according to claim 9 or claim 10, wherein the product is soured.

13. The aerated dairy product according to claim 12, wherein the product comprises quark.

14. The aerated dairy product according any one of claims 10 - 13, wherein the product is a frozen product.

15. A method of producing a premix for an aerated dairy product comprising the steps of:

- providing and mixing starting ingredients comprising at least one saccharide and sugar alcohol selected from dextrose, sorbitol, glycerol, maltitol, erythritol, xylitol, mannitol, lactitol, lactulose, galacto-oligosaccharide or any mixture thereof,
- pasteurizing the mixture,
- cooling the pasteurized mixture to provide a cooled premix,
- optionally ageing the cooled premix,
- optionally drying the premix,
- storing the premix,

wherein the method does not involve a homogenization step.

16. A premix for an aerated dairy product comprising at least one fresh dairy product, at least one saccharide and a sugar alcohol selected from dextrose, sorbitol, glycerol, maltitol, erythritol, xylitol, mannitol, lactitol, lactulose, galacto-oligosaccharide or any mixture thereof, and a mixture of emulsifiers and thickeners.

**Patentansprüche**

1. Verfahren zur Herstellung eines belüfteten Milchprodukts, umfassend die Schritte:

- Bereitstellen und Mischen von Anfangsinhaltsstoffen mit mindestens einem Saccharid und Zuckeralkohol, der ausgewählt ist aus: Dextrose, Sorbit, Glycerin, Maltit, Erythrit, Xylit, Mannit, Lactit, Lactulose, Galacto-Oligosaccharid oder eine Mischung davon,
- Pasteurisieren der Mischung,
- Abkühlen der pasteurisierten Mischung, sodass eine gekühlte Mischung bereitgestellt wird,
- Unterziehen der Mischung einer Belüftungsbehandlung zur Bereitstellung eines belüfteten Milchprodukts,

wobei das Verfahren keinen Homogenisierungsschritt enthält.

2. Verfahren nach Anspruch 1, wobei das Verfahren ferner wenigstens eine der Schritte umfasst:

- Reifenlassen der gekühlten Mischung,
- Verpacken des belüfteten Produkts,
- Lagerung des Produkts.

3. Verfahren nach Anspruch 1 oder Anspruch 2, wobei das Verfahren ferner die Schritte umfasst:

- Bereitstellen und Mischen von Anfangsinhaltsstoffen, die zusätzlich zu dem mindestens ein Saccharid und Zuckeralkohol, der ausgewählt ist aus: Dextrose, Sorbit, Glycerin, Maltit, Erythrit, Xylit, Mannit, Lactit, Lactulose, Galacto-Oligosaccharid oder eine Mischung davon, Wasser, Sahne, Quark und eine Mischung aus Emulgierungsmitteln und Verdickungsmitteln aufweisen,
- Pasteurisieren der Mischung,
- Abkühlen der pasteurisierten Mischung, sodass eine abgekühlte Mischung bereitgestellt wird,
- Unterziehen der Mischung einer Belüftungsbehandlung, sodass ein belüfteten Milchprodukt bereitgestellt wird,
- optionales Reifenlassen der gekühlten Mischung,
- Verpacken des belüfteten Produkts,
- Lagerung des Produkts in einer Freezer,

wobei das Verfahren keinen Homogenisierungsschritt aufweist.

4. Verfahren nach einem der vorhergehenden Ansprüche, wobei die Belüftungsbehandlung ausgeführt wird, indem ein Schlagen mit einem Eiskrem-Freezer, unter Anwendung einer HPP-Technik oder unter Anwendung einer Ultraschalltechnik ausgeführt wird.

5. Verfahren nach einem der vorhergehenden Ansprüche, wobei die Mischung belüftet wird, derart, dass ein belüftetes Milchprodukt mit einem Aufschlag im Bereich von 20 - 120 % bereitgestellt wird.

6. Verfahren nach Anspruch 5, wobei der Aufschlag im Bereich von 60 - 120 % liegt.

7. Verfahren nach einem der Ansprüche 2-6, wobei die gekühlte Mischung 1 bis 4 Stunden lang gereift wird.

8. Verfahren nach einem der Ansprüche 2-7, wobei das Produkt in einem Kühlschrank oder in einer Gefriereinrichtung oder bei einer Umgebungstemperatur von bis zu 40 °C gelagert wird.

9. Belüftetes Milchprodukt, das nach dem Verfahren nach einem der Ansprüche 1 - 8 hergestellt ist.

10. Belüftetes Milchprodukt mit mindestens einem Frischmilchprodukt, mindestens einem Saccharid und einem Zuckeralkohol, der ausgewählt ist aus: Dextrose, Sorbit, Glycerin, Maltit, Erythrit, Xylit, Mannit, Lactit, Lactulose, Galacto-Oligosaccharid oder eine Mischung davon, und einer Mischung aus Emulgierungsmitteln und Verdickungsmitteln, und mit einem Aufschlag im Bereich von 20 - 120 %.

11. Belüftetes Milchprodukt nach Anspruch 10, wobei ein Aufschlag des Produkts im Bereich von 60 - 120 % liegt.

12. Belüftetes Milchprodukt nach Anspruch 9 oder Anspruch 10, wobei das Produkt gesäuert ist.

13. Belüftetes Milchprodukt nach Anspruch 12, wobei das Produkt Quark enthält.

14. Belüftetes Milchprodukt nach einem der Ansprüche 10 - 13, wobei das Produkt ein gefrorenes Produkt ist.

15. Verfahren zur Herstellung einer Vormischung für ein belüftetes Milchprodukt, umfassend die Schritte:

- Bereitstellen und Mischen von Anfangsinhaltsstoffen mit mindestens einem Saccharid und einem Zuckeralkohol, der ausgewählt ist aus: Dextrose, Sorbit, Glycerin, Maltit, Erythrit, Xylit, Mannit, Lactit, Lactulose, Galacto-Oligosaccharid oder eine Mischung davon,
- Pasteurisieren der Mischung,

- Kühlen der pasteurisierten Mischung derart, dass eine gekühlte Vormischung bereitgestellt wird,
- optionales Reifenlassen der gekühlten Vormischung,
- optionales Trocknen der Vormischung,
- Lagerung der Vormischung,

wobei das Verfahren keinen Homogenisierungsschritt enthält.

16. Vormischung für ein belüftetes Milchprodukt mit mindestens einem Frischmilchprodukt, mindestens einem Saccharid und einem Zuckeralkohol, der ausgewählt ist aus: Dextrose, Sorbit, Glycerin, Maltit, Erythrit, Xylit, Mannit, Lactit, Lactulose, Galacto-Oligosaccharid oder eine Mischung davon, und einer Mischung aus Emulgierungsmitteln und Verdickungsmitteln.

## Revendications

1. Procédé de préparation d'un produit laitier aéré comprenant les étapes de :

   - préparation et de mélange des ingrédients de départ comprenant au moins un saccharide et un alcool de sucre sélectionné parmi le dextrose, le sorbitol, le glycérol, le maltitol, l'érythritol, le xylitol, le mannitol, le lactitol, la lactulose, le galacto-oligosaccharide ou un mélange quelconque de ceux-ci,
   - pasteurisation du mélange,
   - refroidissement du mélange pasteurisé pour fournir un mélange refroidi,
   - soumission du mélange à un traitement d'aération pour fournir un produit laitier aéré,

   le procédé
   n'impliquant pas d'étape d'homogénéisation.

2. Procédé selon la revendication 1, le procédé comprenant en outre au moins l'une des étapes de :

   - maturation du mélange refroidi,
   - emballage du produit aéré,
   - stockage du produit.

3. Procédé selon la revendication 1 ou la revendication 2, le procédé comprenant les étapes de :

   - préparation et mélange des ingrédients de départ comprenant en plus dudit saccharide et/ou d'un alcool de sucre sélectionné parmi le dextrose, le sorbitol, le glycérol, le maltitol, l'érythritol, le xylitol, le mannitol, le lactitol, la lactulose, le galacto-oligosaccharide ou un mélange quelconque de ceux-ci, de l'eau, de la crème, du fromage blanc, et un mélange d'agents émulsifiants et d'agents épaississants,
   - pasteurisation du mélange,
   - refroidissement du mélange pasteurisé pour fournir un mélange refroidi,
   - soumission du mélange à un traitement d'aération pour fournir un produit laitier aéré,
   - éventuellement maturation du mélange refroidi,
   - emballage du produit aéré,
   - stockage du produit dans un congélateur,

   le procédé n'impliquant pas d'étape d'homogénéisation.

4. Procédé selon l'une quelconque des revendications précédentes, dans lequel le traitement d'aération est effectué par fouettage avec un freezer pour crème glacée, en utilisant la technique HPP ou en utilisant la technique par ultrasons.

5. Procédé selon l'une quelconque des revendications précédentes, dans lequel le mélange est aéré pour fournir un produit laitier aéré présentant un foisonnement situé dans la plage de 20 à 120 %.

6. Procédé selon la revendication 5, le foisonnement se situant dans la plage de 60 à 120 %.

7. Procédé selon les revendications 2 à 6, le mélange refroidi étant laissé pour maturation durant 1 à 4 heures.

8. Procédé selon l'une quelconque des revendications 2 à 7, le produit étant stocké dans un réfrigérateur ou un congélateur ou à la température ambiante jusqu'à 40°C.

9. Produit laitier aéré fabriqué selon l'une quelconque des revendications 1 à 8.

10. Produit laitier aéré comprenant au moins un produit laitier frais, au moins un saccharide et un alcool de sucre sélectionné parmi le dextrose, le sorbitol, le glycérol, le maltitol, l'érythritol, le xylitol, le mannitol, le lactitol, la lactulose, le galacto-oligosaccharide ou un mélange quelconque de ceux-ci, et un mélange d'agents émulsifiants et d'agents épaississants, et présentant un foisonnement situé dans la plage de 20 à 120 %.

11. Produit laitier aéré selon la revendication 10, un foisonnement du produit se situant dans la plage de 60 à 120 %.

12. Produit laitier aéré selon la revendication 9 ou la revendication 10, le produit étant acidifié.

13. Produit laitier aéré selon la revendication 12, le produit comprenant du fromage blanc.

14. Produit laitier aéré selon l'une quelconque des revendications 10 à 13, le produit étant un produit congelé.

15. Procédé de production d'un prémélange pour un produit laitier aéré comprenant les étapes de :

    - préparation et mélange des ingrédients de départ comprenant au moins un saccharide et un alcool de sucre sélectionné parmi le dextrose, le sorbitol, le glycérol, le maltitol, l'érythritol, le xylitol, le mannitol, le lactitol, la lactulose, le galacto-oligosaccharide ou un mélange quelconque de ceux-ci,
    - pasteurisation du mélange,
    - refroidissement du mélange pasteurisé pour fournir un prémélange refroidi,
    - éventuellement maturation du prémélange refroidi,
    - éventuellement séchage du prémélange,
    - stockage du prémélange,

    le procédé n'impliquant pas d'étape d'homogénéisation.

16. Prémélange pour produit laitier aéré comprenant au moins un produit laitier frais, au moins un saccharide et un alcool de sucre sélectionné parmi le dextrose, le sorbitol, le glycérol, le maltitol, l'érythritol, le xylitol, le mannitol, le lactitol, la lactulose, le galacto-oligosaccharide ou un mélange quelconque de ceux-ci, et un mélange d'agents émulsifiants et d'agents épaississants.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009032976 A
- WO 2013117534 A
- WO 2013083697 A
- EP 0818149 A2
- US 20070003681 A1